# EUROPEAN PATENT SPECIFICATION

(11) **EP 2 639 050 B1**
(45) Date of publication and mention of the grant of the patent: **14.05.2014**
(21) Application number: 12159420.4
(22) Date of filing: 14.03.2012
(51) Int. Cl.: B29D 99/00, B29L 31/08, B29C 33/68, B29C 70/48, B29C 70/44

(54) **Method of manufacturing an article by molding**
Verfahren zur Herstellung eines Artikels mittels Formgebung
Procédé de fabrication d'un article par moulage

(43) Date of publication of application: 18.09.2013
(73) Proprietor: Siemens Aktiengesellschaft, 80333 München (DE)
(72) Inventor: Lind, Soeren Oemann, 4700 Næstved (DK); Madsen, Finn Daugaard, 7190 Billund (DK); Stege, Jason, 7330 Brande (DK)

(56) References cited:
- FR-A1- 2 597 395
- US-A- 4 548 859

## Description

The present invention relates to a method of manufacturing an article by molding. More specifically the present invention relates to a method of manufacturing a wind turbine rotor blade by moulding.

Large moulded articles, like for example wind turbine rotor blades, are typically manufactured by resin transfer moulding (RTM) and, in particular, by vacuum assisted resin transfer moulding (VARTM). In such a method, fibre material is laid in a mould cavity and then a resin is injected into the fibre material. In case of vacuum assisted resin transfer moulding a vacuum is applied to the mould cavity in order to assist the injection of resin into the fibre material. To allow for removing the finished article from the mould a release agent is provided between the surface of the mould cavity and the fibre material. Examples of resin transfer moulding processes are disclosed in EP 1 310 351 B1, WO 2006/058540 A1, WO 2006/058541 A1, and WO 2007/038930 A1.

FR 2 597 395 A1 discloses a method of manufacturing an article by molding, wherein a release sheet ensures high quality surface finish and simplifies releasing the finished article.

With respect to this state of the art it is an objective of the present invention to provide an advantageous method of manufacturing an article by molding.

This objective is achieved by a method of manufacturing an article by molding according to claim 1. The depending claims contain further developments of the invention.

The inventive method of manufacturing an article by molding, comprises the steps of:
- providing a mould with a mould surface representing a negative image of the article to be manufactured, with openings in the mould surface, with flow channels extending from the openings in the mould surface and being connectable to a suction means, and with a periphery delimiting the mould surface;
- fixing a plastic bag to the periphery of the mould;
- inflating the plastic bag to a pressure level above ambient pressure like, for example, 5% to 50% above ambient atmospheric pressure, in particular between 10% to 20% above ambient atmospheric pressure;
- releasing the pressure from the plastic bag while sucking the plastic bag to the mould surface using the suction means;
- layering fabrics onto the plastic bag while it is kept sucked to the mould surface;
- introducing a resin into the fabrics laid onto the plastic bag and curing the resin.

Sucking the plastic bag to the mould surface may coutine until the resin is cured.

In a specific embodiment of the inventive method, the mould surface represents a negative image of a wind turbine rotor blade.

The inventive method allows for providing a wrinkle-free airtight plastic film on the mould surface forming the basis for the layering of fibre material. The plastic material of the plastic bag simplifies releasing the finished article after the moulding process without a costly and time-consuming preparation of the mould surface with a release agent. At the same time, the plastic bag forms a replaceable plastic vacuum membrane on the mould surface. Such a membrane allows for a high quality surface finish of the moulded article. Moreover, when the moulded article is finished the membrane formed by the plastic bag can stay on the surface of the article so as to protect the surface during transportation. The plastic bag can then be removed on site after transportation.

It is advantageous if the flow channels are also connectable to a pump or blower and if a fluid, e.g. air, is pumped or blown through the flow channels to the openings in the mould surface when the plastic bag is being laid onto the mould surface. The fluid then forms a fluid film between the plastic bag and the mould surface, thus reducing friction and simplifying attaching the plastic bag to the periphery of the mould without wrinkles.

When the mould surface is a concave surface, a plastic bag that is slightly smaller, for example 2% to 10% smaller, in particular 3% to 5% smaller, than the mould surface may be used. Then, at least a strip of the plastic bag is heated when it is sucked to the mould surface. The heat weakens the plastic to allow a final expansion leading to a whole coverage of the mould surface by the plastic bag. For example, hot air may be used for heating the plastic bag.

A suitable material for the use as plastic of the plastic bag is polycarbonate. This material has a melting point that is high enough to withstand the exothermic reaction of the epoxy typically used in resin transfer moulding. Yet its melting point is low enough to allow a final expansion leading to a whole coverage of the mould surface by means of simply heating it with hot air. Hence, in an advantageous development of the invention, a polycarbonate bag is used as plastic bag.

Further features properties and advantages of the present invention will become clear from the following description of embodiments in conjunction with the accompanying drawings.
Figure 1 schematically shows a part of a mould for a wind turbine rotor blade in a top view.
Figure 2 schematically shows a first step of the inventive method in a sectional view through the mould of Figure 1.
Figure 3 schematically shows a further step of the inventive method in a sectional view through the mould part of Figure 1.
Figure 4 schematically shows a still further step of the inventive method in a sectional view through the mould part of Figure 1.
Figure 5 schematically shows a still further step of the inventive method in a sectional view through the mould part of Figure 1.

The Figures show a mould part that is used for forming a wind turbine rotor blade as an example for an article to be manufactured by resin transfer moulding. The mould part shown in the figures is the mould part for forming the suction side of the blade. In principle, the blade can be formed by separately forming the shells of the suction side and the pressure side of the blade and then combining both shells to establish the wind turbine rotor blade. On the other hand, it is also possible to form the whole shell in a single moulding step if the mould part for forming the pressure side (not shown) and the mould part for forming the suction side are designed such that they can be combined to form a closed moulding space and if a mould core is present.

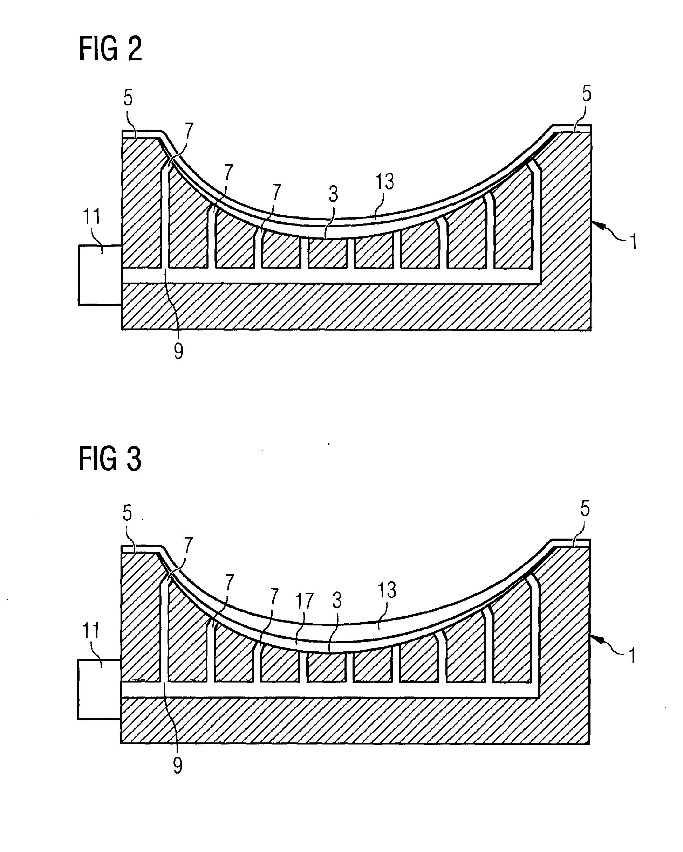

The mould part 1 (only referred to as mould in the following) shown in the Figures comprises a mould surface 3 which is a negative impression of the suction side to be formed (see Fig. 2). Hence, the mould surface has a concave shape. The mould surface 3 is delimited by a periphery 5 which comprises means for fixing a plastic bag 13 thereto. The means could be, for example, an adhesive, clamps, pins, etc. Furthermore, the mould surface comprises a plurality of openings 7 (see Figure 2) by which a fluid, in particular air, can be sucked from the area above the mould surface or blown into this area. To allow for sucking or blowing the openings 7 are connectable to a suction means or a blowing means through flow channels 9 connecting the openings 7 to the suction means or blowing means. In the present embodiment, there is a combined suction and blowing means 11, e.g. a pump or a fan which allows for reversing the flow direction. The mould can, for example, be created from aluminium profiles in a milling process.

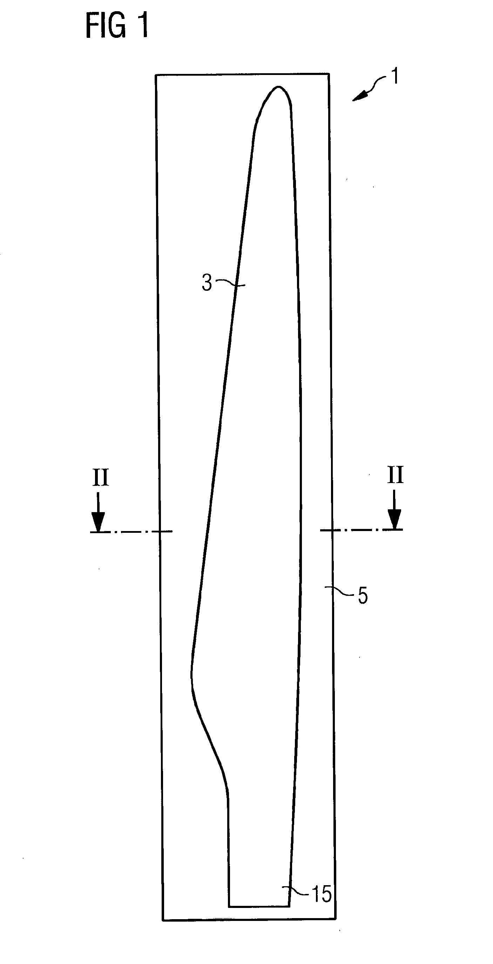

In the following, the inventive method will be described with respect to Figures 2 to 5 which schematically show steps of the inventive method in form of sectional views through the mould 1 of Figure 1.

In a first step of the inventive method, a plastic bag 13 is fixed to the periphery 5 of the mould 1. The dimension of the plastic bag 13 is slightly smaller than the dimension of the mould 1 so that the plastic bag 13 does not contact the concave mould surface 3 at least in the central part of the mould surface 3. The mould 1 with the plastic bag 13 affixed to the periphery 5 of the mould is shown in Figure 2.

Putting the plastic bag 13 into the mould 1 can for example be done by unrolling it roughly to the correct position and then blowing air out of the openings 7 in the mould surface 3 to reduce friction in the plastic which allows fixing the edges of the plastic bag 13 to the periphery 5 without producing wrinkles in the plastic bag.

Once the edges of the plastic bag 13 are fixed to the periphery 5 of the mould 1 the bag 13 is slightly inflated to remove any uneven tension in the plastic. The inflated bag 13 is shown in Figure 3.

Once the plastic bag 13 has adapted the correct shape the pressure that is used for slightly inflating the plastic bag 13 is released and air is slowly sucked out of the space 17 between the plastic 13 and the mould surface 3 by use of the combined suction and blowing means 11. In other words, while the pressure is released vacuum is slowly applied to the space 17 between the bag 13 and the mould surface 3. Thereby, the plastic bag 13 will settle without wrinkles, because it is slightly smaller than the convex surface it shall cover. The section 15 of the mould surface which defines the root end of the wind turbine rotor blade to be formed (compare Figure 1) may be slightly extended avoiding sharp angles to allow the plastic bag to adapt the correct shape without wrinkles.

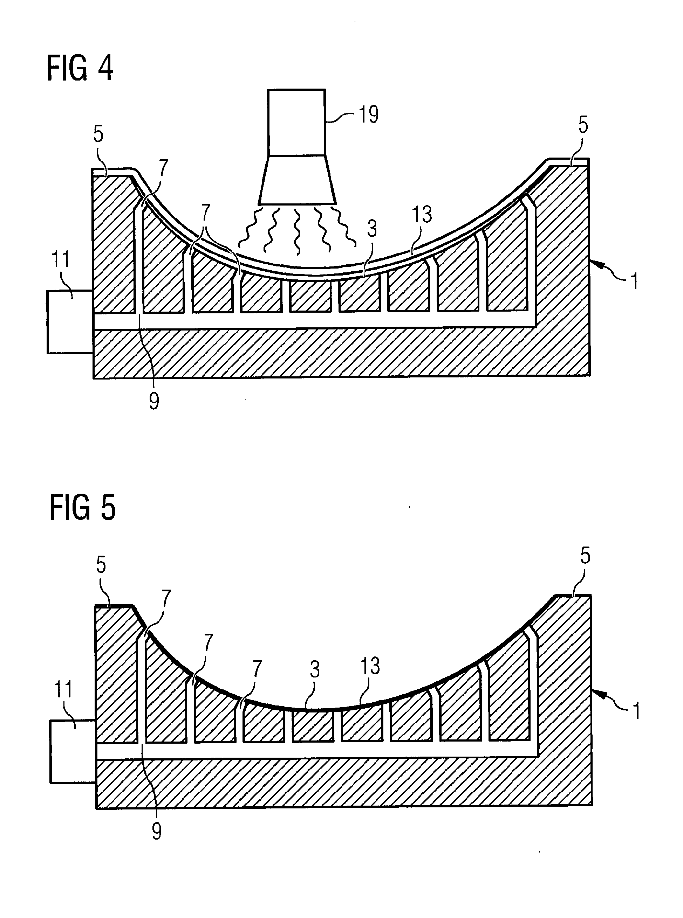

Since the plastic bag 13 is slightly smaller than the surface 3 it shall cover it needs to be expanded in order to rest against the mould surface 3. In order to simplify expansion of the bag the plastic bag 13 may be heated, at least in a central strip in order to weaken the plastic thus reducing resistance against expansion of the plastic bag 13. In the present embodiment the heating is done by a hot air blower 19 that is moved over the plastic bag 13 in the mould 1 and heats at least a central strip of the plastic bag. However, other means of heating the plastic bag, like infrared lamps, filaments, etc. can be used instead of a hot air blower. The weakened plastic then allows the final expansion of the plastic bag to bring it to rest against the mould surface 3. The final expansion of the plastic bag by weakening the plastic by means of the hot air blower 19 is schematically shown in Figure 4. A suitable plastic material for performing this expansion process is polycarbonate which shows the correct temperature resistance for the practical application since its melting point is high enough the withstand the temperatures during the curing of the resin in the moulding process, and the melting point of which is yet low enough that it can be weakened for expansion by use of hot air. For the weakened plastic the suction provided by the combined suction and blowing means 11 is strong enough to suck it against the mould surface 3.

Once the plastic bag 13 rests against the whole mould surface as it is shown in Figure 5 layering of the fibre material (not shown in the Figures) can begin. After the fibre material has been laid in the mould 1 the mould is closed by a second mould part or an air tight cover like a vacuum bag and resin is introduced into the fibre material. Introducing the resin into the fibre material can be assisted by applying a vacuum to the space accommodating the fibre material. After the fibre material is impregnated by the liquid resin heat is applied for curing the resin in order to manufacture the shell of the wind turbine rotor blade. After the curing is complete the vacuum sucking the plastic bag 13 to the mould surface 3 is released. The plastic bag then allows to remove the finished wind turbine rotor blade shell from the mould easily. In addition, removing the shell can be further assisted by blowing air through the openings 7 in the mould surface 3. The plastic bag can be kept at the outside of the wind turbine rotor blade during transportation so as to protect the surface of the rotor blade. The bag would then be removed on the construction site after transportation.

The inventive method allows for simply removing the finished wind turbine rotor blade shell from the mould without the use of a release agent. Moreover, using the plastic bag provides for a high quality surface finish of the shell since the plastic bag can cover the mould surface without wrinkles. Putting the plastic bag onto the mould surface without wrinkles can be achieved by reducing friction by blowing air out of the openings 7 in the mould surface 3. Inflation of the plastic bag 13 then removes unevenly distributed tension in the plastic bag. By sucking the plastic bag towards the mould surface 3 while releasing the pressure out of the inflated plastic bag leaves the bag in tension while it settles towards the mould surface 3 which prevents from the formation of wrinkles in the plastic bag. The remaining tension is then removed by the hot air blower or any other suitable heating means to soften the plastic so that it can settle completely to the mould surface 3.

Although the present invention has been described with respect to a specific embodiment in conjunction with the accompanying drawings deviations from this embodiment are possible. For example, while in the present embodiment the heating of the plastic bag is done from the side of the bag which shows away from the mould surface the heating could as well be done from the mould surface. Moreover, although polycarbonate is mentioned as material of the bag any other material which is suitable to withstand the temperatures during curing of the resin and which can be sufficiently softened for the final expansion process can be used as material of the plastic bag. Softening does not necessarily need to be performed by heating. It could as well be done by, for example, chemical means. Hence, the present invention shall not be restricted to the exemplary embodiment but shall only be delimited by the appended claims.

## Claims

1. A method of manufacturing an article by molding, comprising the steps of:
- providing a mould (1) with a mould surface (3) representing a negative image of the article to be manufactured, with openings (7) in the mould surface (3), with flow channels (9) extending from the openings in the mould surface (3) and being connectable to a suction means (11), and with a periphery (5) delimiting the mould surface (3);
- fixing a plastic bag to the periphery (5) of the mould (1);
- inflating the plastic bag to a pressure level above ambient pressure;
- releasing the pressure from the plastic bag (13) while sucking the plastic bag (13) to the mould surface (3) using the suction means (11);
- layering fabrics onto the plastic bag (13) while it is kept sucked to the mould surface (3);
- introducing a resin into the fabrics laid onto the plastic bag (13) and curing the resin.

2. The method as claimed in claim 1, wherein the flow channels (9) are connectable to a pump or blower (11) and a fluid is pumped or blown through the flow channels (9) to the openings (7) in the mould surface (3) when the plastic bag (13) is being laid onto the mould surface (3).

3. The method as claimed in claim 1 or claim 2, wherein the mould surface (3) is a concave surface, a plastic bag (13) is used that is slightly smaller than the mould surface (3) and at least a strip of the plastic bag (13) is heated when it is sucked to the mould surface (3).

4. The method as claimed in claim 3, wherein hot air is used for heating the plastic bag (13).

5. The method as claimed in any of the claims 1 to 4, wherein the plastic bag (13) is sucked to the mould surface (3) until the resin is cured.

6. The method as claimed in any of the claims 1 to 5, wherein a polycarbonate bag is used as plastic bag (13).

7. The method as claimed in any of the claims 1 to 6, wherein the mould surface (3) represents a negative image of a wind turbine rotor blade.

## Patentansprüche

1. Verfahren zur Herstellung eines Artikels mittels Formgebung, welches die folgenden Schritte umfasst:
- Bereitstellen einer Form (1) mit einer Formfläche (3), die ein Negativbild des herzustellenden Artikels darstellt, mit Öffnungen (7) in der Formfläche (3), mit Strömungskanälen (9), die sich von den Öffnungen in der Formfläche (3) aus erstrecken und mit einem Saugmittel (11) verbindbar sind, und mit einem Umfang (5), der die Formfläche (3) begrenzt;
- Befestigen eines Kunststoffbeutels an dem Umfang (5) der Form (1) ;
- Aufblasen des Kunststoffbeutels bis zu einem Druckniveau über dem Umgebungsdruck;
- Ablassen des Drucks aus dem Kunststoffbeutel (13) bei gleichzeitigem Ansaugen des Kunststoffbeutels (13) an die Formfläche (3) unter Verwendung des Saugmittels (11);
- Schichten von Geweben auf den Kunststoffbeutel (13), während er an die Formfläche (3) angesaugt gehalten wird;
- Einbringen eines Harzes in die auf den Kunststoffbeutel (13) gelegten Gewebe und Härten des Harzes.

2. Verfahren nach Anspruch 1, wobei die Strömungskanäle (9) mit einer Pumpe oder einem Gebläse (11) verbindbar sind und ein Fluid durch die Strömungskanäle (9) zu den Öffnungen (7) in der Formfläche (3) gepumpt oder geblasen wird, wenn der Kunststoffbeutel (13) auf die Formfläche (3) aufgelegt wird.

3. Verfahren nach Anspruch 1 oder Anspruch 2, wobei die Formfläche (3) eine konkave Fläche ist, ein Kunststoffbeutel (13) verwendet wird, welcher ein wenig kleiner als die Formfläche (3) ist, und wenigstens ein Streifen des Kunststoffbeutels (13) erwärmt wird, wenn er an die Formfläche (3) angesaugt wird.

4. Verfahren nach Anspruch 3, wobei Heißluft zum Erwärmen des Kunststoffbeutels (13) verwendet wird.

5. Verfahren nach einem der Ansprüche 1 bis 4, wobei der Kunststoffbeutel (13) an die Formfläche (3) angesaugt wird, bis das Harz ausgehärtet ist.

6. Verfahren nach einem der Ansprüche 1 bis 5, wobei ein Polycarbonatbeutel als Kunststoffbeutel (13) verwendet wird.

7. Verfahren nach einem der Ansprüche 1 bis 6, wobei die Formfläche (3) ein Negativbild eines Windenergieanlagen-Rotorblattes darstellt.

## Revendications

1. Procédé de fabrication d'un article par moulage, comprenant les étapes consistant à :
- fournir un moule (1) comportant une surface de moule (3) représentant une image négative de l'article à fabriquer, comportant des ouvertures (7) dans la surface de moule (3), comportant des canaux d'écoulement (9) s'étendant à partir des ouvertures dans la surface de moule (3) et qui peuvent être raccordés à un moyen d'aspiration (11), et comportant une périphérie (5) délimitant la surface de moule (3) ;
- fixer un sac plastique à la périphérie (5) du moule (1) ;
- gonfler le sac plastique à un niveau de pression supérieur à la pression ambiante ;
- libérer la pression du sac plastique (13) tout en aspirant le sac plastique (13) vers la surface de moule (3) à l'aide du moyen d'aspiration (11) ;
- disposer des tissus en couches sur le sac plastique (13) pendant qu'il est maintenu aspiré vers la surface de moule (3) ;
- introduire une résine dans les tissus déposés sur le sac plastique (13) et durcir la résine.

2. Procédé selon la revendication 1, dans lequel les canaux d'écoulement (9) peuvent être raccordés à une pompe ou une soufflante (11) et un fluide est pompé ou soufflé à travers les canaux d'écoulement (9) vers les ouvertures (7) dans la surface de moule (3) lorsque le sac plastique (13) est déposé sur la surface de moule (3).

3. Procédé selon la revendication 1 ou la revendication 2, dans lequel la surface de moule (3) est une surface concave, un sac plastique (13) est utilisé qui est légèrement plus petit que la surface de moule (3) et au moins une bande du sac plastique (13) est chauffée lorsqu'elle est aspirée vers la surface de moule (3).

4. Procédé selon la revendication 3, dans lequel de l'air chaud est utilisé pour chauffer le sac plastique (13).

5. Procédé selon l'une quelconque des revendications 1 à 4, dans lequel le sac plastique (13) est aspiré vers la surface de moule (3) jusqu'à ce que la résine soit durcie.

6. Procédé selon l'une quelconque des revendications 1 à 5, dans lequel un sac en polycarbonate est utilisé en tant que sac plastique (13).

7. Procédé selon l'une quelconque des revendications 1 à 6, dans lequel la surface de moule (3) représente une image négative d'une pale de rotor d'éolienne.
